# EUROPÄISCHE PATENTSCHRIFT

(11) **EP 2 577 837 B1**
(45) Veröffentlichungstag und Bekanntmachung des Hinweises auf die Patenterteilung: **28.12.2016**
(21) Anmeldenummer: 11718939.9
(22) Anmeldetag: 20.04.2011
(51) Int. Cl.: H02J 50/12, H02J 7/02, H02J 7/00, H01M 10/46, H01M 10/42

(54) **ANORDNUNG UND VERFAHREN ZUM BETREIBEN EINER ANORDNUNG**
ARRANGEMENT AND METHOD FOR OPERATING AN ARRANGEMENT
DISPOSITIF ET PROCÉDÉ SERVANT À FAIRE FONCTIONNER UN DISPOSITIF

(30) Priorität: 27.05.2010 DE 102010021707
(43) Veröffentlichungstag der Anmeldung: 10.04.2013
(73) Patentinhaber: Sew-Eurodrive GmbH & Co. KG, 76646 Bruchsal (DE)
(72) Erfinder: SCHNEIDER, Bernhard, 68794 Oberhausen-Rheinhausen (DE); PODBIELSKI, Leobald, 76199 Karlsruhe (DE)
(86) Internationale Anmeldenummer: PCT/EP2011/002008
(87) Internationale Veröffentlichungsnummer: WO 2011/147509

(56) Entgegenhaltungen:
- EP-A1- 0 740 388
- WO-A1-97/42695
- WO-A1-03/092148
- WO-A2-2006/100264
- US-A- 5 982 143
- US-A1- 2010 044 123

## Beschreibung

Die Erfindung betrifft eine Anordnung und ein Verfahren zum Betreiben einer Anordnung.

Ladegeräte zum Laden von Akkumulatoren sind allgemein bekannt.

Aus der EP 0 740 388 A1 ist ein Batterieladegerät bekannt, wobei Module der Batterie in Reihe geschaltet und jeweils induktiv mit elektrischer Leistung versorgbar sind.

Aus der WO 031092148 A1 ist ein Schaltnetzteilanordnung, die mehrere induktive Schaltnetzteilübertrager aufweist.

Der Erfindung liegt daher die Aufgabe zugrunde, einen Energiespeicher schneller und einfacher verbessert aufzuladen.

Erfindungsgemäß wird die Aufgabe bei der Anordnung nach den in Anspruch 1 und bei dem Verfahren nach den in Anspruch 11 angegebenen Merkmalen gelöst.

Wichtige Merkmale der Erfindung bei der Anordnung zum Laden von Zellen eines Energiespeichers, insbesondere Akkumulators oder Batterie, aus einer Stromquelle sind, dass
jeder Zelle ein Modul zugeordnet ist, aus dessen Ausgangsspannung die zugeordnete Zelle aufladbar ist,
wobei die Module von der Stromquelle versorgbar sind und eingangsseitig voneinander galvanisch getrennt sind.

Von Vorteil ist dabei, dass die Zellen eines Akkumulators gleichmäßig aufladbar und entladbar sind. Insbesondere sind auf die Zelien individuell verschieden sich auswirkende Einflüsse, wie beispielsweise Fertigungstoleranzen, Kapazitätstoleranzen, Temperaturschwankungen, Alterung und dergleichen, ausgleichbar. Denn Spannung jeder Zelle wird mittels der Module individuell beeinflusst und auf den gewünschten Sollwert hin regelbar. Überladung und Tiefentladung von einzelnen Zellen sind vermeidbar. Jeder Zelle ist also eine Ladevorrichtung zugeordnet, wobei diese Ladevorrichtungen voneinander getrennt betrieben sind.

Insgesamt ist somit ein schnelleres und einfacheres Aufladen ermöglicht.

Bei einer vorteilhaften Ausgestaltung ist von einem aus der Stromquelle gespeisten Primärleiter Energie induktiv an die Module übertragbar zur Versorgung der Module aus der Stromquelle. Von Vorteil ist dabei, dass eine einfache Verbindungstechnik ausführbar ist, nämlich das Durchschleifen eines Primärleiter durch die Ringkerne, also quasi als Ösen wirkende Ringkerne. Somit ist keine Steckverbindung zum Übertragen von elektrischer Energie notwendig, wodurch auch bei korrodierenden Metallen erfindungsgemäß die volle Leistung übertragbar ist.

Bei einer vorteilhaften Ausgestaltung sind die Zellen in Reihe geschaltet, insbesondere so dass die Gesamtspannung des Energiespeichers der Summe der einzelnen Zellenspannungen des Energiespeichers entspricht. Von Vorteil ist dabei, dass ein aus Zellen aufgebauter Akkumulator einsetzbar ist und somit eine hohe Spannung bereit stellbar ist, wobei die Zellen jeweils optimal aufladbar oder entladbar sind.

Bei einer vorteilhaften Ausgestaltung ist der Primärleiter als Stromschleife ausgeführt, in welche von der Stromquelle ein Strom einprägbar ist. Von Vorteil ist dabei, dass mittels der Stromeinprägung die Aufladung der Zellen steuerbar ist. Bei Vorgabe eines größeren Stromwertes ist ein höherer Ladestrom erreichbar als bei Vorgabe eines kleineren Stroms. Außerdem sind mit weiteren über Ringkerne induktiv gekoppelte weitere Verbraucher speisbar.

Bei einer vorteilhaften Ausgestaltung ist jedem Modul eingangsseitig ein Ringkern zugeordnet, durch welchen der Primärleiter durchschleifbar ist und um den eine Sekundärwicklung angeordnet, insbesondere gewickelt vorgesehen, ist, zur eingangsseitigen Speisung des Moduls. Von Vorteil ist dabei, dass mittels der Stromvorgabe die Sekundärspannung vorgebbar ist und somit das Aufladen steuerbar. Außerdem sind die Module eingangsseitig in einfacher Weise galvanisch getrennt.

Bei einer vorteilhaften Ausgestaltung weist das Modul als Kompensation der Sekundärwicklung eine Kapazität auf, die derart parallel und/oder in Reihe zur Sekundärwicklung zugeschaltet ist, dass die zugehörige Resonanzfrequenz im Wesentlichen der Frequenz des in den Primärleiter eingeprägten Stromes entspricht. Von Vorteil ist dabei, dass auch bei schwacher Kopplung, insbesondere wegen des langgestreckten Verlegens des Primärleiters, also dem Fehlen von Windungen des Primärleiters, ein hoher Wirkungsgrad erreichbar ist.

Bei einer vorteilhaften Ausgestaltung ist aus dem Schwingkreis ein Gleichrichter, insbesondere mit nachgeschaltetem DC/DC-Wandler, versorgbar ist, aus dem die Zelle speisbar. Von Vorteil ist dabei, dass mittels des DC/DE-Wandlers auf eine vorgebbare Sollspannung hin steuerbar ist, insbesondere sogar unabhängig von einem schwankenden Primärleiterstrom. Hierbei ist vorzugsweise ein Mittel zur Erzeugung eines fest vorgebbaren ausgangsseitigen Spannungswertes im DC/DC-Wandler integriert, so dass die Ausgangsspannung auf eine Konstantspannung oder eine vorgebbare Konstantspannung hin regelbar ist.

Bei einer vorteilhaften Ausgestaltung weist die Stromquelle einen Wechselrichter, insbesondere einen pulsweitenmoduliert ansteuerbaren Wechselrichter, auf, der aus einer Gleichspannung versorgt wird,
insbesondere wobei die Ausgangsseite des Wechselrichters einen Vierpol speist, der eine derart dimensionierte Kapazität und Induktivität aufweist, dass die zugehörige Resonanzfrequenz im Wesentlichen der Frequenz der vom Wechselrichter erzeugten Ausgangsspannung entspricht,
insbesondere wobei der Vierpol ein Gyrator ist. Von Vorteil ist dabei, dass aus einer Spannungsquelle ein Wechselrichter speisbar ist, dessen ausgangsseitig einem Spannungs-Strom-Wandler zuführbar ist. Auf diese Weise wird das spannungsquellenartige Verhalten in ein Stromquellenartiges Verhalten umgeändert.

Bei einer vorteilhaften Ausgestaltung sind die Module mit den Zellen fest verbunden, insbesondere von einem gemeinsamen Gehäuse umgeben sind, wobei die Ringkerne aus dem Verbund herausstehen, insbesondere derart parallel ausgerichtet, dass die Primärleitung geradlinig durchschleifbar ist durch die Ringkerne. Von Vorteil ist dabei, dass ein schnelles, einfaches Verbinden der Energieversorgung ermöglicht ist, wobei keine elektrische Kontaktierung notwendig ist. Somit ist ein Anschließen der Energieversorgung auch in Nassbereichen oder in säurehaltiger Umgebung ermöglicht. Die Energieübertragung ist dabei weitgehend unabhängig von Korrosion, insbesondere Korrosion von Oberflächenteilen der metallischen Teile.

Bei einer vorteilhaften Ausgestaltung wird die den Wechselrichter versorgende Gleichspannung aus der Reihenschaltung der Zellen erzeugt, insbesondere so dass ein Ausgleichsladen der Zellen ermöglicht ist. Von Vorteil ist dabei, dass die von den Zellen bereit gestellte Spannung selbst wiederum zum Versorgen der Module benutzt wird, mit denen die Zellen beladen werden. Auf diese Weise ist ein Ausbalancieren der einzelnen Zellenspannungen ermöglicht, was zu einer gleichmäßigen Auslastung oder Beladung führt.

Bei einer vorteilhaften Ausgestaltung ist eine jeweilige weitere Wicklung am jeweiligen Ringkern angeordnet, insbesondere um den Ringkern gewickelt, so dass aus der induzierten Spannung ein Maß für die Rückschlagspannung des Moduls erfassbar ist,
wobei die weitere Wicklung mit der Steuerelektronik der Stromquelle, insbesondere welche die pulsweitenmodulierten Ansteuersignale erzeugt, verbunden ist. Von Vorteil ist dabei, dass die individuelle Spannung an einer Zelle berücksichtigbar ist und somit ein individuell auf jede Zelle gerichtetes Betreiben der Zelle, insbesondere mittels Aufladen und Entladen, ermöglicht ist.

Bei einer vorteilhaften Ausgestaltung ist ein weiteres Modul mit Ringkern vorgesehen, das aus dem Primärleiter versorgbar ist und mit einem weiteren Energiespeicher, insbesondere Batterie, verbunden ist, insbesondere so dass dieser weitere Energiespeicher ebenfalls von der Stromquelle aufladbar ist. Von Vorteil ist dabei, dass auch weitere Verbraucher, wie beispielsweise der weitere Energiespeicher, versorgbar sind. Auch dies wird wiederum ohne elektrische Kontaktierung ermöglicht und somit auch bei korrodierten Oberflächenteilen der metallischen Übertragungselemente.

Wichtige Merkmale bei dem Verfahren zum Betreiben einer oben beschriebenen Anordnung sind, dass ein der Strom in den Primärleiter derart eingeprägt wird, dass ein Laden der Zellen des Energiespeichers ausgeführt wird. Von Vorteil ist dabei, dass mittels der Steuerung des Primärleiterstroms der Aufladevorgang steuerbar ist. Dabei ist im einfachsten Fall, also bei passiven Modulen, mittels der Stromvorgabe im Primärleiter die Aufladespannung an den Zellen in gleichmäßiger Weise vorgebbar.

Bei einer vorteilhaften Ausgestaltung werden die an den weiteren Wicklungen erfassten Spannungen als Istwerten einem Regler einer Steuerelektronik zugeführt, so dass ein Beenden des Ladevorgangs abhängig von diesen Istwerten ausgeführt wird. Von Vorteil ist dabei, dass die Verteilung der einzelnen Zellenspannungen bestimmbar ist, insbesondere die Abweichung der kleinsten und/oder der größten Zellenspannung vom Durchschnitt aller Zellenspannungen. Somit ist eine Aktion auslösbar, wenn die Abweichung einen kritischen Abweichungswert überschreitet.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erstes erfindungsgemäßes Ausführungsbeispiel schematisch skizziert, wobei beispielhaft vier Module 1 gezeigt sind.
In der Figur 2 ist ein zweites erfindungsgemäßes Ausführungsbeispiel schematisch skizziert, wobei Signalleitungen 20 zur Spannungserfassung vorgesehen sind.
In der Figur 3 ist ein Modul vergrößert dargestellt.
In der Figur 4 ist die Versorgung der Einspeisung aus der Serienschaltung der Zellen gezeigt, wodurch ein Balancing ausführbar ist.
In der Figur 5 ist gezeigt, wie eine induktive Energieübertragung an ein mobiles System ermöglicht ist.

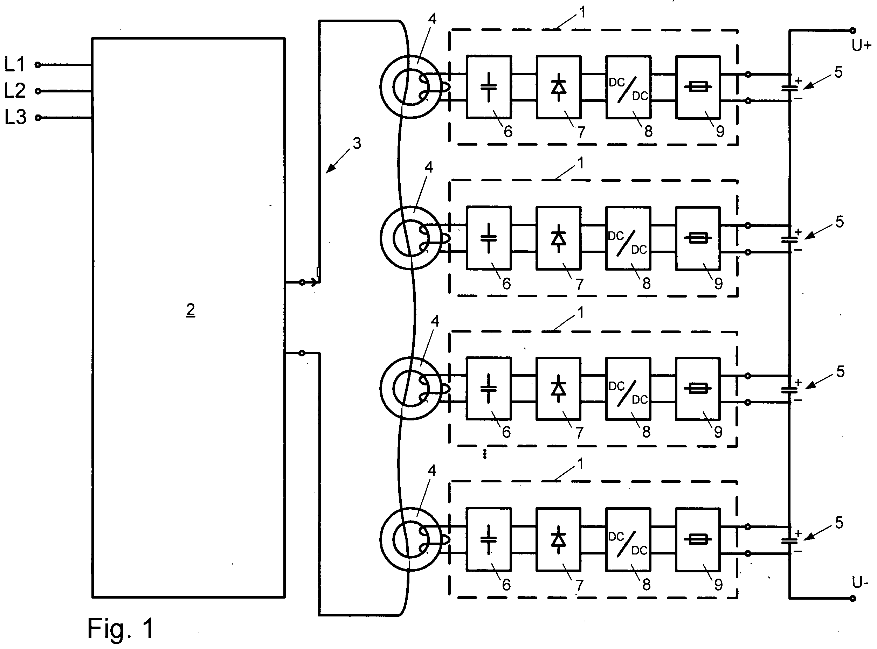

Gemäß Figur 1 wird von einer netzgespeisten oder gleichspannungsgespeisten Wechselstromquelle 2 ein Wechselstrom in eine Stromschleife 3 eingeprägt.

Bei gleichspannungsgespeister Ausführung weist die Wechselstromquelle einen einphasigen Wechselrichter auf, der vorzugsweise zwei Halbbrücken umfasst, die jeweils eine Reihenschaltung von Halbleiterschaltern aufweisen, denen jeweils eine Diode parallel zugeschaltet ist. Durch beispielsweise pulsweitenmoduliertes getaktetes Betreiben der Schalter ist aus der speisenden Gleichspannung eine Wechselspannung erzeugbar, die eine Sollfrequenz zwischen vorzugsweise 10 und 500 kHz aufweist. Aus dieser Wechselspannung ist ein Vierpol, insbesondere Gyrator, speisbar, der derart abgestimmte Kapazitäten und Induktivitäten aufweist, dass die zugehörige Resonanzfrequenz im Wesentlichen der Frequenz der Wechselspannung entspricht. Somit ist ausgangsseitig vom Vierpol ein Wechselstrom erzeugbar und aus dieser Wechselstromquelle 2 ist ein betragskonstanter Wechselstrom in eine Stromschleife 3 einprägbar.

Bei netzgespeister Versorgung wird die Netzspannung, beispielsweise eine Drehspannung, gleichgerichtet und geglättet. Mit dieser geglätteten Spannung wird dann in der oben beschriebenen Weise die Wechselstromquelle versorgt.

Mittels eines jeweils zu einem Modul 1 zugeordneten Ringkerns 4 ist eine induktive Versorgung des Moduls 1 aus der Stromschleife 3 ausführbar. Hierzu ist die elektrische Leitung der Stromschleife 3 durch die Öffnung des Ringkerns 4 hindurchführbar und das Modul aus einer dem jeweiligen Modul 1 zugeordneten jeweiligen Sekundärwicklung versorgbar. Dabei ist die Sekundärwicklung um den Ringkern 4 gewickelt und als Kompensation 6 ist der Sekundärwicklung eine Kapazität derart parallel und/oder in Reihe zugeschaltet, dass die zugehörige Resonanzfrequenz im Wesentlichen der Frequenz des eingeprägten Stromes entspricht. Auf diese Weise ist auch bei schwacher Kopplung zur als Primärleiter wirkenden Stromschleife 3 hin ein hoher Wirkungsgrad erreichbar.

Aus der Sekundärwicklung, insbesondere mit ihrer Kompensation 6 zusammen, wird ein Gleichrichter 7 versorgt, der wiederum eine Anpassung 8, insbesondere einen DC/DC-Steller speist, so dass über eine Sicherung 9 eine konstante Spannung ausgangsseitig zur Verfügung stellbar ist. Auf diese Weise ist eine Zelle 5 eines Akkumulators aufladbar auf eine Sollspannung. In einer einfacheren Ausführungsvariante sind die DC/DC-Steller einsparbar, da schon die Ausgangsspannung am Gleichrichter 7 im Wesentlichen proportional zum Primärleiterstrom ist und somit mittels Steuern des Primärleiterstroms in der Stromschleife die Ausgangsspannung der Module gleichartig steuerbar sind.

Somit ist der Akkumulator aus einer Reihenschaltung von Zellen 5 zusammensetzbar , wobei die Module 1 die ihnen jeweils zugeordneten Zellen 5 auf die gewünschte Sollspannung führen. Dabei sind die Module 1 jeweils eingangsseitig galvanisch getrennt und somit der jeweils zugeordneten Zelle 5 parallel zuschaltbar.

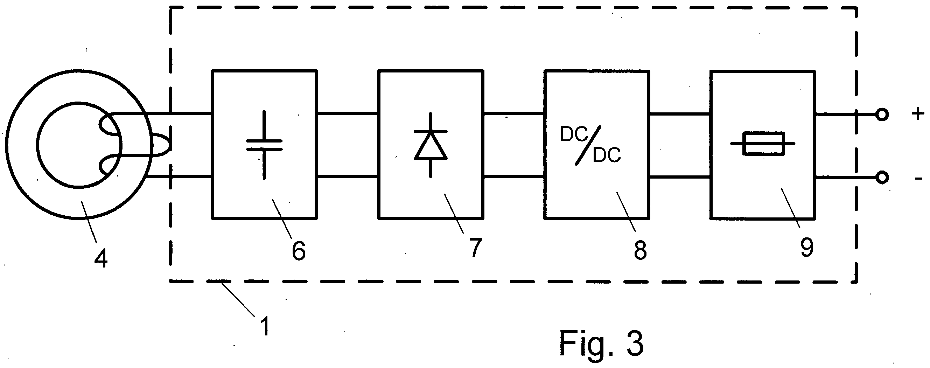

In Figur 3 ist die Sekundärwicklung des Moduls samt dem restlichen Modul 1 vergrößert dargestellt.

Mechanisch sind die Module 1 zusammen mit den Zellen 5 insgesamt fest verbunden, so dass die gesamte Anordnung von außen gesehen eine Einheit darstellt, insbesondere auch für Transportzwecke. Des Weiteren erscheinen am äußeren Umfang der Einheit die Ringkerne 4, durch welche der Leiter der Stromschleife 3 hindurchzuschleifen ist. Die Verbindung ist vorzugsweise auch durch Vergießen ausgeführt, so dass die Ringkerne zumindest teilweise von Vergussmasse gehalten sind.

Vorzugsweise sind die Module 1 derart ausgeführt, dass sie eine zum im Primärleiter eingeprägten Strom proportionale Ausgangsspannung an ihrer Ausgangsseite, also zur Speisung der Zelle 5, erzeugen. Somit ist mittels der Stromvorgabe im Primärleiter ein gleicher Ausgangsspannungswert für alle Module vorsehbar. Auf diese Weise ist eine Symmetrisierung aller Zellen des Akkumulators, also ein Hinregeln auf jeweils gleich große Ausgangsspannungen der Zellen 5, erreichbar.

Alternativ sind die Module 1 derart ausgeführt, dass sie eine zum im Primärleiter eingeprägten Strom eineindeutig zugeordnete Ausgangsspannung an ihrer Ausgangsseite, also zur Speisung der Zelle 5, erzeugen. Somit ist mittels der Stromvorgabe im Primärleiter ein gleicher Ausgangsspannungswert für alle Module vorsehbar - auch wenn keine Proportionalität sonder ein anderer, vorzugsweise ein streng monotoner Zusammenhang zwischen Strom im Primärleiter und Ausgangsspannung besteht. Auf diese Weise ist also ebenfalls eine Symmetrisierung aller Zellen des Akkumulators, also ein Hinregeln auf jeweils gleich große Ausgangsspannungen der Zellen 5, erreichbar. Unsymmetrieen in der Kapazitätsverteilung der Zellen werden somit ausgleichbar.

Des Weiteren ist auch ein weiteres, in Figur 1 nicht gezeigtes Modul 1 vorsehbar, das wiederum eine Sekundärwicklung aufweist, welche auf einen Ringkern 4 gewickelt ist, durch welchen die Leitung der Stromschleife 3 hindurchgeschleift ist, so dass aus dem Modul 1 eine Batterie versorgbar ist, die unabhängig von den Zellen 5 vorgesehen ist. Diese Batterie ist beispielsweise eine 12 Volt Batterie oder eine 24 Volt Batterie. Mit solchen weiteren Modulen 1 sind in gleicher Weise auch weitere Akkus, Batterieen oder sonstige Verbraucher versorgbar.

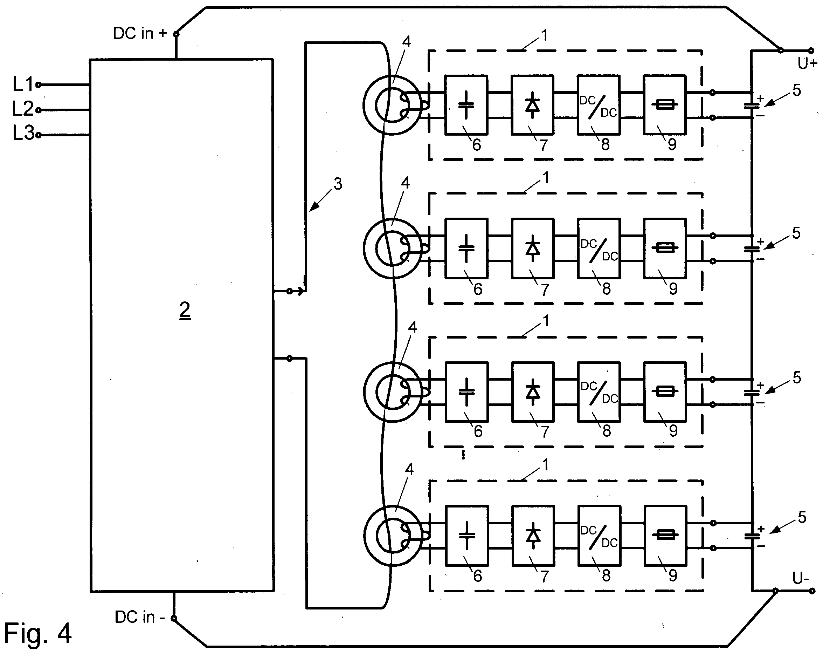

In einem weiteren erfindungsgemäßen Ausführungsbeispiel, das beispielshaft in Figur 4 veranschaulicht ist, wird die Wechselstromquelle 2 aus demjenigen Akkumulator versorgt, der aus der Reihenschaltung von Zellen 5 gebildet ist. Hierbei versorgen also die Module 1 jeweilige Zeilen 5, die wiederum in Reihe zusammengeschaltet sind, wobei aus der so gebildeten Gesamtspannung die Wechselstromquelle versorgbar ist. Auf diese Weise ist auch während des Betriebes, also bei Versorgung eines Verbrauchers aus der Gesamtspannung, ein ausgleichendes Beladen der Zellen 5 ermöglicht. Auf diese Weise sind alle Zellen in gleichem Ladezustand haltbar, also alle Zellen in gleicher Weise entladbar oder aufladbar, und es wird eine Tiefentladung oder ein Unterschreiten der kritischen Reverse-Spannung beispielsweise einer einzigen Zelle vermieden. Die Einzelspannungen der Zellen 5 werden also symmetrisiert. Im Endeffekt stärken somit die stärkeren Zellen, also Zellen mit mehr Energieinhalt, schwächere. Es ist also ein Balancing im Ruhezustand oder im Entladezustand erreichbar.

Auf diese Weise werden bei den genannten Ausführungsbeispielen herstellungsbedingte Toleranzen. Alterung und temperaturbedingte Unterschiede ausgeglichen, insbesondere bei solchen bei den verschiedenen Zellen verschiedenen Einflüssen.

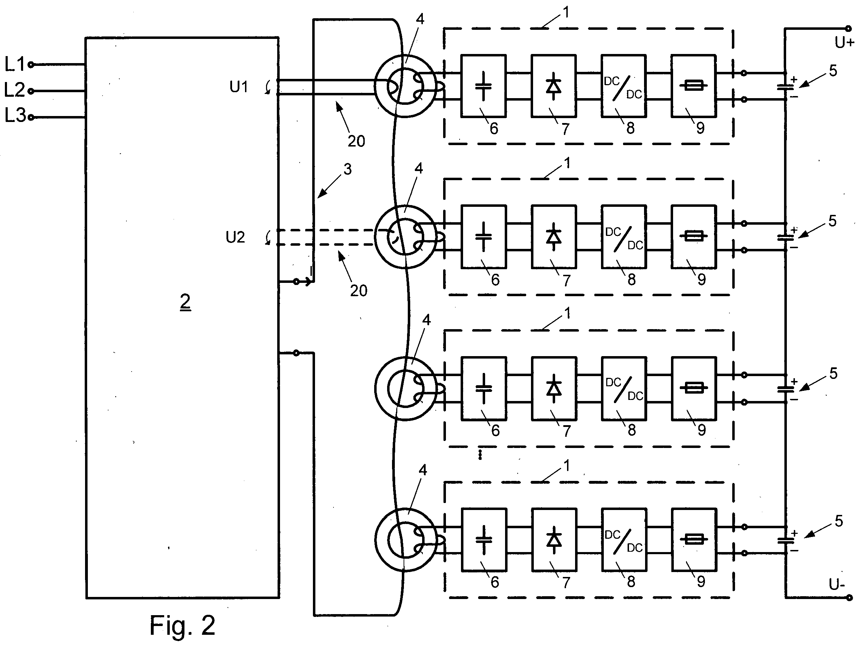

In dem weiteren erfindungsgemäßen Ausführungsbeispiel nach Figur 2 ist eine Signalleitung 20 zur Spannungserfassung als Wicklung um den Ringkern 4 gewickelt und zur Steuerelektronik der Wechselstromquelle geführt. Auf diese Weise ist ein Maß für die effektive induzierte Eingangsspannung am Modul 1 potentialfrei erfassbar, so dass ein Hinregeln auf eine Sollspannung ausführbar ist. Da durch alle Ringkerne 4 derselbe Primärleiterstrom der Stromschleife 3 fließt, sind unterschiedliche Spannungen auf die im Kern induzierte Rückschlagspannung zurückzuführen. Somit lässt sich aus den unterschiedlichen Spannungen an den Ringkernen 4 der Balancing-Grad ermitteln. Beispielsweise ist die größte erfasste Spannung derjenigen Zelle 5 zuzuordnen, die den größten Ausgleichsbedarf hat. Des Weiteren ist bei Überschreiten eines kritischen Wertes durch die größte Spannungshöhe das Beenden des Ausgleichsladens einleitbar. Mit der Wahl des kritischen Wertes hierbei lässt sich die zulässige Schwankungsbreite des Ladezustandes der Zellen 5 festlegen.

Vorteiligerweise ist die Spannungserfassung an den Ringkernen 4 galvanisch getrennt ausführbar.

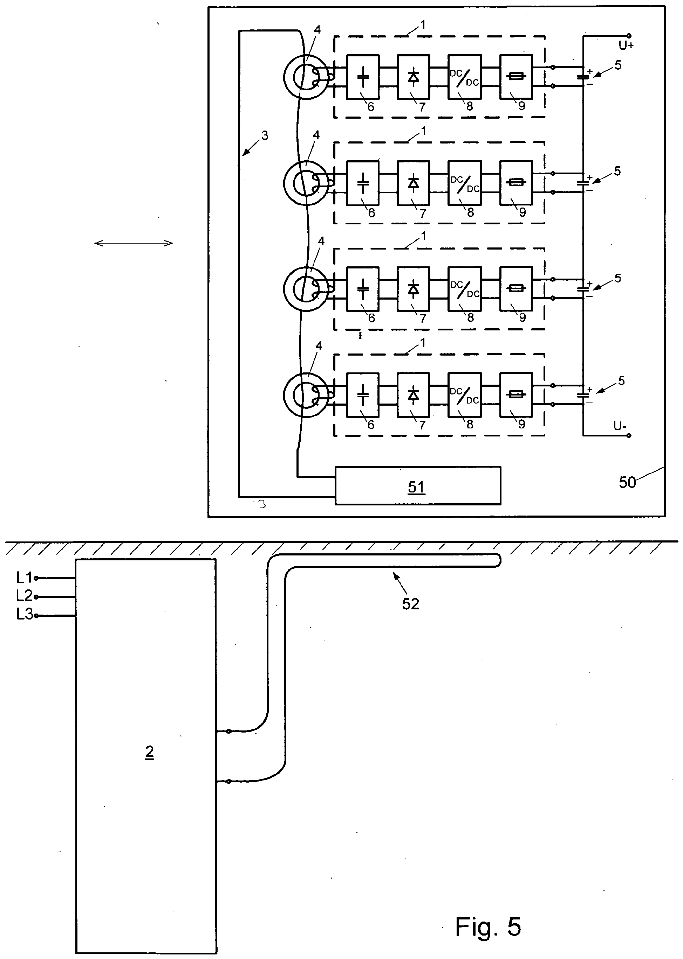

In Figur 5 ist eine Anlage gezeigt, bei der ein bewegbares Teil 50, beispielswiese ein Fahrzeug, eine Sekundärwicklung 51 aufweist, die induktiv koppelbar ist mit einer im stationären Teil der Anlage verlegten Primärleiterschleife 52, welche aus der Wechselstromquelle 2 gespeist ist, also einen Wechselstrom eingeprägt bekommt. Dabei ist der Sekundärwicklung vorzugsweise eine nicht gezeigte Kapazität parallel und/oder in Reihe zugeschaltet, so dass die zugehörige Resonanzfrequenz im Wesentlichen der Frequenz des in die Primärleiterschleife eingeprägten Wechselstroms entspricht.

Vorzugswiese ist der Primärleiter langgestreckt entlang einer Schiene oder Bahn verlegt, entlang derer das bewegbare Teil 50 bewegt wird.

### Bezugszeichenliste

- 1: Modul
- 2: Wechselstromquelle
- 3: Stromschleife
- 4: Ringkern
- 5: Zelle
- 6: Kompensation
- 7: Gleichrichtung
- 8: Anpassung
- 9: Sicherung
- 20: Signalleitung zur Spannungserfassung
- 50: bewegbares Teil
- 51: Sekundärwicklung
- 52: Primärleiterschleife

## Patentansprüche

1. Anordnung zum Laden von Zellen eines Energiespeichers, insbesondere Akkumulators oder Batterie, aus einer Stromquelle,
**dadurch gekennzeichnet, dass**
jeder Zelle ein Modul zugeordnet ist, aus dessen Ausgangsspannung die zugeordnete Zelle aufladbar ist,
wobei die Module von der Stromquelle versorgbar sind und eingangsseitig voneinander galvanisch getrennt sind,
wobei jedem Modul eingangsseitig ein Ringkern zugeordnet ist, durch welchen der Primärleiter durchschleifbar ist und um den eine Sekundärwicklung angeordnet, insbesondere gewickelt vorgesehen, ist, zur eingangsseitigen Speisung des Moduls,
wobei die Module mit den Zellen fest verbunden sind, indem sie von einem gemeinsamen Gehäuse umgeben sind, wobei die Ringkerne aus dem Verbund herausstehen, insbesondere derart parallel ausgerichtet, dass die Primärleitung geradlinig durchschleifbar ist durch die Ringkerne
wobei jedes Modul als Kompensation der Sekundärwicklung eine Kapazität aufweist, die derart parallel und/oder in Reihe zur Sekundärwicklung zugeschaltet ist, dass die zugehörige Resonanzfrequenz im Wesentlichen der Frequenz des in den Primärleiter eingeprägten Stromes entspricht,
wobei aus diesem Schwingkreis ein Gleichrichter mit nachgeschaltetem DC/DC-Wandler versorgbar ist, aus welchem die Zelle speisbar ist,
wobei eine jeweilige weitere Wicklung am jeweiligen Ringkern angeordnet, insbesondere um den Ringkern gewickelt, ist, so dass aus der induzierten Spannung ein Maß für die Rückschlagspannung des Moduls erfassbar ist,
wobei die weitere Wicklung mit der Steuerelektronik der Stromquelle, insbesondere welche die pulsweitenmodulierten Ansteuersignale erzeugt, verbunden ist.

2. Anordnung nach Anspruch 1,
**dadurch gekennzeichnet, dass**
von einem aus der Stromquelle gespeisten Primärleiter Energie induktiv an die Module übertragbar ist zur Versorgung der Module aus der Stromquelle.

3. Anordnung nach mindestens einem der vorangegangenen Ansprüche,
**dadurch gekennzeichnet, dass**
die Zellen in Reihe geschaltet sind, insbesondere so dass die Gesamtspannung des Energiespeichers der Summe der einzelnen Zellenspannungen des Energiespeichers entspricht.

4. Anordnung nach mindestens einem der vorangegangenen Ansprüche,
**dadurch gekennzeichnet, dass**
der Primärleiter als Stromschleife ausgeführt ist, in welche von der Stromquelle ein Strom einprägbar ist.

5. Anordnung nach mindestens einem der vorangegangenen Ansprüche,
**dadurch gekennzeichnet, dass**
das Modul als Kompensation der Sekundärwicklung eine Kapazität aufweist, die derart parallel und/oder in Reihe zur Sekundärwicklung zugeschaltet ist, dass die zugehörige Resonanzfrequenz im Wesentlichen der Frequenz des in den Primärleiter eingeprägten Stromes entspricht.

6. Anordnung nach mindestens einem der vorangegangenen Ansprüche,
**dadurch gekennzeichnet, dass**
aus dem Schwingkreis ein Gleichrichter mit nachgeschaltetem DC/DC-Wandler versorgbar ist, aus dem die Zelle speisbar ist.

7. Anordnung nach mindestens einem der vorangegangenen Ansprüche,
**dadurch gekennzeichnet, dass**
die Stromquelle einen Wechselrichter, insbesondere einen pulsweitenmoduliert ansteuerbaren Wechselrichter, aufweist, der aus einer Gleichspannung versorgt wird,
insbesondere wobei die Ausgangsseite des Wechselrichters einen Vierpol speist, der eine derart dimensionierte Kapazität und Induktivität aufweist, dass die zugehörige Resonanzfrequenz im Wesentlichen der Frequenz der vom Wechselrichter erzeugten Ausgangsspannung entspricht,
insbesondere wobei der Vierpol ein Gyrator ist.

8. Anordnung nach mindestens einem der vorangegangenen Ansprüche,
**dadurch gekennzeichnet, dass**
die den Wechselrichter versorgende Gleichspannung aus der Reihenschaltung der Zellen erzeugt wird, insbesondere so dass ein Ausgleichsladen der Zellen ermöglicht ist.

9. Anordnung nach mindestens einem der vorangegangenen Ansprüche,
**dadurch gekennzeichnet, dass**
ein weiteres Modul mit Ringkern vorgesehen ist, das aus dem Primärleiter versorgbar ist und mit einem weiteren Energiespeicher, insbesondere Batterie, verbunden ist, insbesondere so dass dieser weitere Energiespeicher ebenfalls von der Stromquelle aufladbar ist.

10. Anordnung nach mindestens einem der vorangegangenen Ansprüche,
**dadurch gekennzeichnet, dass**
der Primärleiter induktiv aus der Stromquelle versorgt wird und auf einem rotatorisch oder linear bewegbaren Teil einer Anlage, insbesondere auf einem Fahrzeug, insbesondere schienengeführtes Fahrzeug, angeordnet ist,
insbesondere wobei der Primärleiter entlang der Schiene langgestreckt verlegt ist.

11. Verfahren zum Betreiben einer Anordnung nach mindestens einem der vorangegangenen Ansprüche,
**dadurch gekennzeichnet, dass**
ein der Strom in den Primärleiter derart eingeprägt wird, dass ein Laden der Zellen des Energiespeichers ausgeführt wird

12. Verfahren nach Anspruch 11,
**dadurch gekennzeichnet, dass**
die an den weiteren Wicklungen erfassten Spannungen als Istwerten einem Regler einer Steuerelektronik zugeführt werden, so dass ein Beenden des Ladevorgangs abhängig von diesen Istwerten ausgeführt wird.

## Claims

1. Arrangement for charging cells of an energy store, in particular accumulator or battery, from a current source, **characterised in that**
each cell is assigned a module, from the output voltage of which the assigned cell can be charged,
wherein the modules can be supplied by the current source and are electrically isolated from one another on the input side, wherein each module is assigned, on the input side, a toroidal core, through which the primary conductor can be looped and around which a secondary winding is arranged, in particular provided in a wound manner, for input-side feeding of the module,
wherein the modules are fixedly connected to the cells by being surrounded by a common housing, the toroidal cores protruding from the assembly, in particular being aligned parallel in such a manner that the primary conductor can be looped through the toroidal cores in a straight line,
wherein each module has as compensation of the secondary winding a capacitance which is connected in parallel and/or in series to the secondary winding in such a manner that the associated resonant frequency corresponds substantially to the frequency of the current applied to the primary conductor, wherein from this resonant circuit a rectifier with downstream DC/DC converter can be supplied, from which the cell can be fed,
wherein a respective further winding is arranged on the respective toroidal core, in particular wound around the toroidal core, so that a measure of the kickback voltage of the module is detectable from the induced voltage,
wherein the further winding is connected to the control electronics of the current source, in particular which generates the pulse-width-modulated drive signals.

2. Arrangement according to Claim 1,
**characterised in that**
by a primary conductor fed from the current source, energy can be inductively transmitted to the modules to supply the modules from the current source.

3. Arrangement according to at least one of the preceding claims,
**characterised in that**
the cells are connected in series, in particular so that the total voltage of the energy store corresponds to the sum of the individual cell voltages of the energy store.

4. Arrangement according to at least one of the preceding claims,
**characterised in that**
the primary conductor is embodied as a current loop, to which a current can be applied by the current source.

5. Arrangement according to at least one of the preceding claims,
**characterised in that**
the module has as compensation of the secondary winding a capacitance which is connected in parallel and/or in series to the secondary winding in such a manner that the associated resonant frequency corresponds substantially to the frequency of the current applied to the primary conductor.

6. Arrangement according to at least one of the preceding claims,
**characterised in that**
from the resonant circuit a rectifier with downstream DC/DC converter can be supplied, from which the cell can be fed.

7. Arrangement according to at least one of the preceding claims,
**characterised in that**
the current source has an inverter, in particular an inverter controllable by pulse-width modulation, which is supplied from a direct-current voltage,
in particular wherein the output side of the inverter feeds a quadripole which has a capacitance and inductance dimensioned in such a manner that the associated resonant frequency corresponds substantially to the frequency of the output voltage generated by the inverter,
in particular wherein the quadripole is a gyrator.

8. Arrangement according to at least one of the preceding claims,
**characterised in that**
the direct-current voltage supplying the inverter is generated from the series connection of the cells, in particular so that an equalising charging of the cells is made possible.

9. Arrangement according to at least one of the preceding claims,
**characterised in that**
a further module with toroidal core is provided, which can be supplied from the primary conductor and is connected to a further energy store, in particular battery, in particular so that this further energy store can likewise be charged by the current source.

10. Arrangement according to at least one of the preceding claims,
**characterised in that**
the primary conductor is supplied inductively from the current source and is arranged on a rotationally or linearly movable part of a system, in particular on a vehicle, in particular rail-guided vehicle,
in particular wherein the primary conductor is laid elongated along the rail.

11. Method for operating an arrangement according to at least one of the preceding claims,
**characterised in that**
a current is applied to the primary conductor in such a manner that a charging of the cells of the energy store is carried out.

12. Method according to Claim 11,
**characterised in that**
the voltages detected at the further windings are supplied as instantaneous values to a controller of control electronics,
so that a termination of the charging operation is carried out in dependence on these instantaneous values.

## Revendications

1. Dispositif pour charger à partir d'une source de courant des éléments d'un accumulateur d'énergie, en particulier d'un accumulateur ou d'une batterie, **caractérisé en ce qu'**un module est associé à chaque élément, et l'élément associé peut être rechargé à partir de la tension de sortie de ce module,
sachant que les modules peuvent être alimentés par la source de courant et sont isolés galvaniquement les uns des autres du côté d'entrée,
sachant qu'un noyau toroïdal est associé du côté d'entrée à chaque module, noyau à travers lequel peut passer un conducteur primaire et autour duquel est disposé, en particulier est prévu enroulé, un bobinage secondaire destiné à l'alimentation du module du côté d'entrée,
sachant que les modules sont fixement assemblés aux éléments, par le fait qu'ils sont entourés par un boîtier commun, sachant que les noyaux toroïdaux dépassent de l'ensemble, en particulier sont orientés en parallèle de telle sorte que la ligne primaire peut passer en ligne droite à travers les noyaux toroïdaux,
sachant que chaque module présente, à titre de compensation du bobinage secondaire, un condensateur qui est mis en circuit en parallèle et/ou en série avec le bobinage secondaire de telle sorte que la fréquence de résonance associée correspond pour l'essentiel à la fréquence du courant injecté dans le conducteur primaire,
sachant qu'on peut alimenter à partir de ce circuit oscillant un redresseur suivi d'un convertisseur à courant continu, à partir duquel l'élément peut être alimenté,
sachant qu'un autre bobinage respectif est disposé sur le noyau toroïdal respectif, en particulier est enroulé autour du noyau toroïdal, de sorte qu'on peut déterminer à partir de la tension induite une mesure de la tension de retour du module,
sachant que l'autre bobinage est relié à l'équipement électronique de commande de la source de courant, en particulier qui produit les signaux d'asservissement à modulation de largeur d'impulsions.

2. Dispositif selon la revendication 1, **caractérisé en ce qu'**un conducteur primaire alimenté par la source de courant peut transmettre de l'énergie par induction aux modules, afin d'alimenter les modules à partir de la source de courant.

3. Dispositif selon au moins une des revendications précédentes, **caractérisé en ce que** les éléments sont montés en série, en particulier de sorte que la tension totale de l'accumulateur d'énergie correspond à la somme des tensions individuelles des éléments de l'accumulateur d'énergie.

4. Dispositif selon au moins une des revendications précédentes, **caractérisé en ce que** le conducteur primaire est réalisé sous la forme d'une boucle de courant, dans laquelle peut être injecté un courant provenant de la source de courant.

5. Dispositif selon au moins une des revendications précédentes, **caractérisé en ce que** le module présente, à titre de compensation du bobinage secondaire, un condensateur qui est mis en circuit en parallèle et/ou en série avec le bobinage secondaire de telle sorte que la fréquence de résonance associée correspond pour l'essentiel à la fréquence du courant injecté dans le conducteur primaire.

6. Dispositif selon au moins une des revendications précédentes, **caractérisé en ce qu'**on peut alimenter à partir du circuit oscillant un redresseur suivi d'un convertisseur à courant continu, à partir duquel l'élément peut être alimenté.

7. Dispositif selon au moins une des revendications précédentes, **caractérisé en ce que** la source de courant présente un convertisseur, en particulier un convertisseur pouvant être asservi à modulation de largeur d'impulsions, qui est alimenté à partir d'une tension continue,
sachant notamment que le côté de sortie du convertisseur alimente un quadripôle qui présente un condensateur et une résistance inductive dimensionnés de telle sorte que la fréquence de résonance associée correspond pour l'essentiel à la fréquence de la tension de sortie produite par le convertisseur,
sachant notamment que le quadripôle est un gyrateur.

8. Dispositif selon au moins une des revendications précédentes, **caractérisé en ce que** la tension continue alimentant le convertisseur est produite à partir du montage en série des éléments, de sorte notamment qu'une charge de compensation des éléments est rendue possible.

9. Dispositif selon au moins une des revendications précédentes, **caractérisé en ce qu'**il est prévu un autre module avec noyau toroïdal qui peut être alimenté à partir du conducteur primaire et qui est relié à un autre accumulateur d'énergie, en particulier une batterie, de sorte notamment que cet autre accumulateur d'énergie peut lui aussi être rechargé par la source de courant.

10. Dispositif selon au moins une des revendications précédentes, **caractérisé en ce que** le conducteur primaire est alimenté par induction à partir de la source de courant et est disposé sur un élément d'une installation pouvant être déplacé en rotation ou linéairement, en particulier sur un véhicule, notamment un véhicule guidé sur rail,
sachant notamment que le conducteur primaire est posé en s'étendant en longueur le long du rail.

11. Procédé pour faire fonctionner un dispositif selon au moins une des revendications précédentes, **caractérisé en ce qu'**un courant est injecté dans le conducteur primaire de telle sorte qu'on effectue une charge des éléments de l'accumulateur d'énergie.

12. Procédé selon la revendication 11, **caractérisé en ce que** les tensions enregistrées sur les autres bobinages sont apportées comme valeurs effectives à un régulateur d'un équipement électronique de commande, de sorte qu'on met fin au processus de charge en fonction de ces valeurs effectives.
